# EUROPEAN PATENT SPECIFICATION

(11) **EP 4 578 662 B1**
(45) Date of publication and mention of the grant of the patent: **19.08.2026**
(21) Application number: 24222085.3
(22) Date of filing: 20.12.2024
(51) Int. Cl.: B60B 29/00, B60B 30/02

(54) **EQUIPMENT FOR MOUNTING, REMOVING AND MOVING A WHEEL OF A MOTOR VEHICLE**
VORRICHTUNG ZUM MONTIEREN, DEMONTIEREN UND BEWEGEN EINES RADES EINES KRAFTFAHRZEUGS.
ÉQUIPEMENT POUR LE MONTAGE, LE DÉMONTAGE ET LE DÉPLACEMENT D'UNE ROUE D'UN VÉHICULE AUTOMOBILE.

(30) Priority: 29.12.2023 IT 202300028380
(43) Date of publication of application: 02.07.2025
(73) Proprietor: Euroreifen MS S.r.L., 38068 Marco di Rovereto (TN) (IT)
(72) Inventor: MENGONI, Emanuele, 38068 Marco di Rovereto TN) (IT)
(74) Representative: Mittler, Andrea

(56) References cited:
- WO-A1-2022/204783
- DE-B4- 102011 052 953
- US-A- 3 858 735
- US-A1- 2018 215 212

## Description

The present invention concerns an equipment for mounting, removing and moving a wheel of a motor vehicle.

In mechanical workshops used for the maintenance of motor vehicles, there is a need to speed up operations on the motor vehicle and at the same time reduce the effort by the operator.

The term motor vehicle means herein a generic vehicle (car, bus, lorry, road train, etc.) powered by its own engine and having the energy source on board, with at least four wheels, capable of circulating on ordinary roads and equipped with devices for direction and braking.

A component of the motor vehicle typically subject to routine maintenance is the tire.

In countries with areas subject to very hot summers and very cold winters with ice and snow, it is necessary to adapt the vehicle to very different climatic conditions.

The tires are the contact component of the vehicle with the ground, which is consequently greatly influenced by the state of the ground, resulting in completely different conditions between the over 30°C in summer and even -20°C in winter.

For several years now, motorists have been adopting two different sets of tires, one for a period from April to November, and one for the remaining period of the year.

Winter tires are typically softer in order to better adapt to low temperatures and slippery ground. Disadvantageously, they cannot be used in the summer because they would harden and then definitively lose their positive properties for the winter.

In the months of April and November, workshops are thus subject to heavy workloads, with hundreds of vehicles on which to change the tires.

Typically the tire change operation envisages the following steps for each tire:
- removing the wheel from the axle of the motor vehicle raised on a service elevator, wherein the wheel means the combination of tire and rim;
- moving the wheel to a bench;
- replacing the tire on the same rim;
- storing the replaced tire;
- balancing the new tire on the rim;
- moving the wheel with the new tire towards the motor vehicle;
- mounting the wheel with the new tire.

The movement operations are generally manual or at the most they make use of a carriage. Normally the wheel must be rotated through 90°, lying vertically when mounted and horizontally when placed on the ground or on a bench.

It should be underlined that the law requires an operator to lift no more than 40kg and an apprentice no more than 20kg. A wheel of a motor vehicle can weigh more than 40kg.

It is not only necessary to mount and remove a wheel when the tire change takes place, but also for other motor vehicle maintenance operations such as, for example, intervention on the brakes or suspension.

Solutions for the mounting and removing a wheel are known which provide gripping devices that allow the wheel to be lifted and coupled to the axle of a motor vehicle, and vice versa.

US-11796295, US-20230007948 and CN-116533679 describe gripping heads with bars and pneumatic drives.

Disadvantageously, these are automatic robot heads not suitable for traditional mechanical workshops where space is limited and where more economical solutions are sought.

CA-1114856 describes a flag structure with a gripping head which however is not suitable for gripping a wheel, for example for changing tires in a mechanical workshop for the maintenance of a motor vehicle.

WO-2022/204783 describes an equipment for mounting and removing a wheel on/from a motor vehicle and moving the wheel in a mechanical workshop.

It is the object of the present invention to provide an equipment for mounting and removing a wheel on/from a motor vehicle, which allows the wheel to be moved manually in space without any effort, with the simple help of pneumatic means controlled directly by the operator, also allowing a 90° rotation of the wheel, between a horizontal position and a vertical position.

A further object of the present invention is that said equipment allows the mounting of the wheel on the axle of the motor vehicle, and vice versa, in a mechanical workshop for the maintenance of a motor vehicle.

Yet another object of the present invention is that said equipment is not bulky, it is simple to manufacture and inexpensive.

According to the invention, said and further objects are achieved by an equipment for mounting and removing a wheel on/from a motor vehicle, and moving the wheel in a mechanical workshop, as defined in claim 1.

Advantageously, the equipment is made with inexpensive means available on the market, mostly tubular elements with pneumatic means, it adapts to the spaces of any mechanical workshop and allows for example a quick tire change with little effort by the operator who can perform hundreds of tire changes in a day, thus increasing the productivity of the workshop in terms of assistance, especially in the months of April and November when the need for tire changes is greater, from winter tires to summer tires or vice versa.

The telescopic movement of the parallel tubulars makes it easy to pick up and release a wheel using a compact structure.

These and other features of the present invention will become more apparent from the following detailed description of a practical embodiment thereof, shown by way of non-limiting example in the accompanying drawings, in which:
Figure 1 shows a perspective view of an equipment according to the present invention;
Figure 2 shows a plan view from above of a flag support of the equipment;
Figure 3 shows a perspective front view of a gripping device of the equipment, with a parallelogram portion of a head of the gripping device in a vertical position;
Figure 4 shows a rear perspective view of the gripping device, with the parallelogram portion in a vertical position;
Figure 5 shows a view similar to that of Figure 3, with the parallelogram portion in a horizontal position;
Figure 6 shows a view similar to that of Figure 4, with the parallelogram portion in a horizontal position.

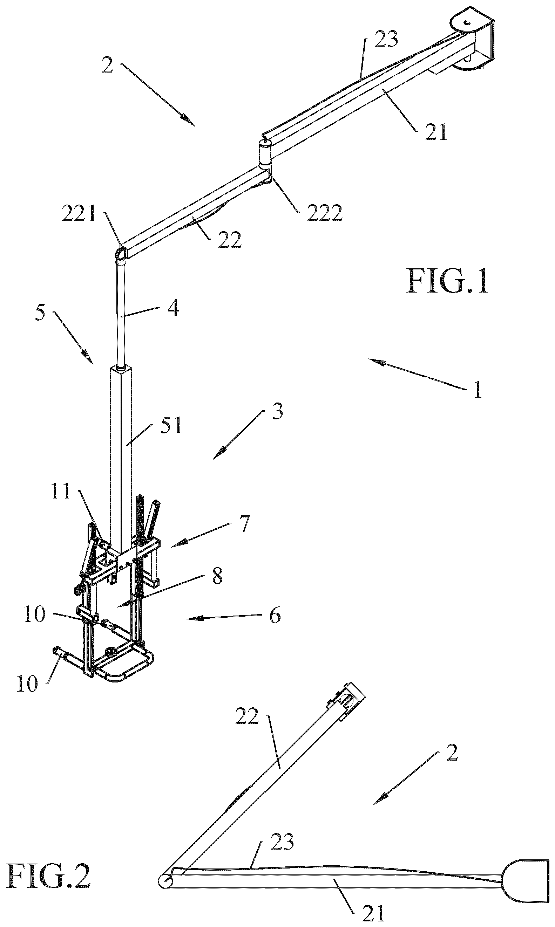

An equipment 1 for mounting and removing a wheel on/from a motor vehicle and moving the wheel in a mechanical workshop (Figure 1), comprises flag support means 2 and a gripping device 3 for a wheel, wherein wheel means the assembly of tire and rim.

The flag support means 2 (Figure 2) comprise a first arm 21 and a second arm 22 rotatably fixed to the first arm 21 which in turn is rotatably fixed to means integral with the ground, for example a column.

The arms 21, 22 extend horizontally and the rotations of the second arm 22 with respect to the first arm 21, and of the first arm 21 with respect to the column, take place about a vertical axis. The second arm 22 is hinged to the first arm 21 so as to be able to rotate 360°, also below the first arm 21 which is longer than the second arm 22 so as not to interfere for example with the column during rotation with respect to the first arm 21.

Figures 1 and 2 also show a hose 23 into which the air for the pneumatic means passes, which will be described below. The hinge between the first arm 21 and second arm 22 preferably allows the passage of said hose 23 so as not to hinder the mutual rotary movement.

From one end 221 of the second arm 22, opposite to the end 222 rotatably fixed to the first arm 21, a rod 4 extends downwards, substantially vertically, which is part of a pneumatic piston 5 able to vary the height of a head 6 of the gripping device 3.

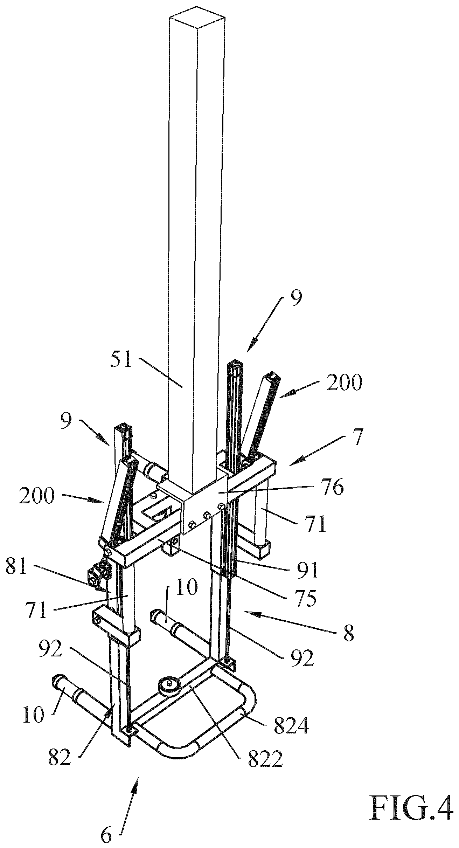

The head 6 comprises a C-shaped support 7 (Figure 4) composed of two tubulars 71, preferably with a round section, parallel to each other and integral with the ends of a connecting tubular 75 preferably with a square section.

The connecting tubular 75 is fixed to a cylinder 51 of the pneumatic piston 5 by means of an L-shaped plate 76 so as to be orthogonal to the cylinder 51 of the pneumatic piston 5.

The tubulars 71 extend downwards and also perform the function of handles for the operator and preferably as a support for control means (not shown) of pneumatic means such as for example the pneumatic piston 5.

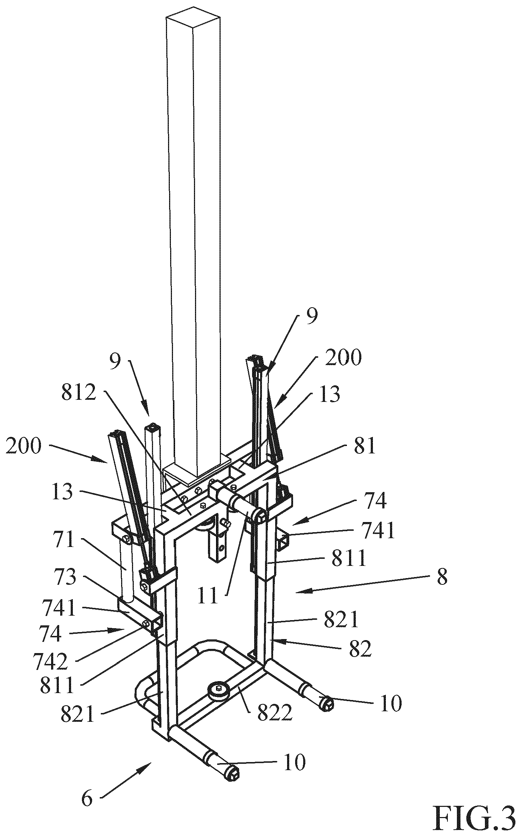

The head 6 also comprises a parallelogram element 8 (Figure 3) rotatably fixed by connection means 74 to the C-shaped support 7 at the lower ends 73 of the tubulars 71.

The connection means 74 preferably comprise a pair of tubulars 741 orthogonal to the tubulars 71 and attachment pins 742.

The parallelogram element 8 can be rotated about a horizontal axis with respect to the C-shaped support 7 (Figures 3-6).

The parallelogram element 8 is composed of a first C-shaped portion 81 and a second C-shaped portion 82, wherein the first C-shaped portion 81 is rotatably fixed to the C-shaped support 7 via the connection means 74.

The first C-shaped portion 81 comprises two parallel tubulars 811 and a connecting tubular 812 able to rigidly connect said two parallel tubulars 811.

The second C-shaped portion 82 comprises two parallel tubulars 821 and a connecting tubular 822 able to rigidly connect said two parallel tubulars 821.

The two parallel tubulars 821 of the second C-shaped portion 82 are able to be telescopically inserted into the two parallel tubulars 811 of the first C-shaped portion 81.

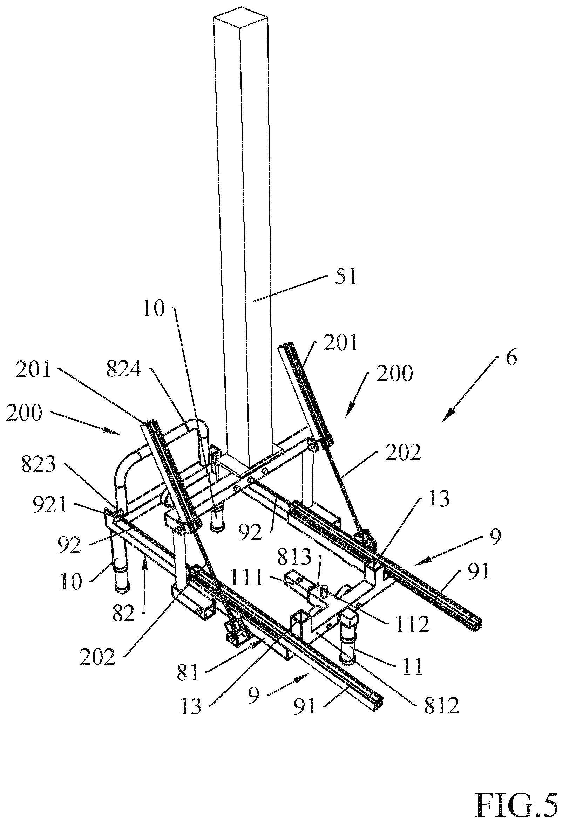

Two pneumatic pistons 9 (Figure 5) control the sliding of the second C-shaped portion 82 with respect to the first C-shaped portion 81.

The pneumatic pistons 9 comprise cylinders 91 fixed to the parallel tubulars 811 of the first C-shaped portion 81, and rods 92, sliding in the cylinders 91, having an end 921 fixed to projections 823 of the parallel tubulars 821 of the second C-shaped portion 82.

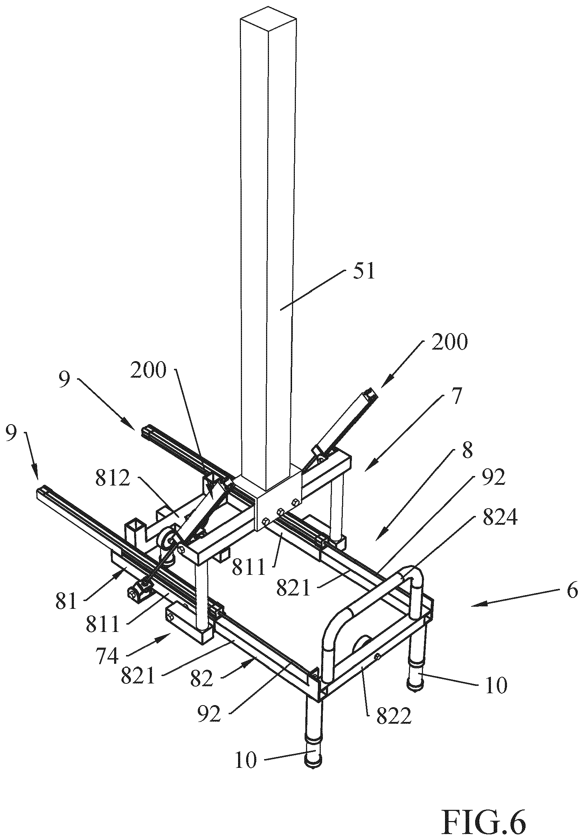

A handle 824 preferably extends from the connecting tubular 822 of the second C-shaped portion 82 (Figure 6), while, from the ends of the parallel tubulars 821 and of the connecting tubular 822, two gripping rollers 10 extend in an orthogonal direction with respect to the tubulars 821, 822.

A gripping roller 11 extends from the connecting tubular 812, substantially in a median position, (Figure 5) in a direction orthogonal to the tubulars 811, 812. The position of the gripping roller 11 with respect to the connecting tubular 812 is adjustable in the direction of the parallel tubulars 811 by means of a tubular 111 equipped with through holes.

The tubular 111 extends in the direction of the parallel tubulars 811, is integral with the gripping roller 11 and is able to slide in a through hole of the connecting tubular 812 which extends into a projection 813 of the connecting tubular 812. A manually maneuverable pin 112 allows the position of the gripping roller 11 to be defined with respect to the connection tubular 812.

The tubulars of the parallelogram element 8 preferably have a square section.

The gripping rollers 10, 11 are parallel to each other and define the vertices of a triangle.

The gripping roller 10 is preferably shorter than the gripping rollers 11 to facilitate the use of the head 6 in the presence of vehicle suspensions.

The movement of the second C-shaped portion 82 with respect to the first C-shaped portion 81 allows the distance between the two gripping rollers 10 of the second C-shaped portion 82 and the gripping roller 11 of the first C-shaped portion 81 to be varied, thus allowing the wheel to be gripped or released.

Consequently, the configuration of the parallelogram element 8 is variable between a gripping position of the wheel and a release position of the wheel.

The position of the parallelogram element 8 is variable between a horizontal position in which the engaged wheel has a horizontal position, i.e. with vertical axis of rotation, and a vertical position in which the engaged wheel has a vertical position, i.e. with horizontal axis of rotation (Figures 3 and 5, and Figures 4 and 6).

The position of the parallelogram element 8 is modified manually by the operator or by pneumatic means, abutment means preferably being provided to define the horizontal and vertical positions of the parallelogram element 8.

The pneumatic means (Figure 5) comprise a pair of pneumatic pistons 200 having a pair of cylinders 201 rotatably fixed to the C-shaped support 7, and respective rods 202 sliding in the cylinders 201 and rotatably fixed to respective parallel tubulars 811 of the first C-shaped portion 81. The axes of rotation of the pneumatic pistons 200 are parallel to the connecting tubulars 812, 822.

The abutment means comprise a pair of projections 13 which extend from the connecting tubular 812 of the first C-shaped portion 81 in the opposite direction with respect to the gripping roller 11. The pair of projections 13 is able to abut on the C-shaped support 7 if the parallelogram element 8 is in a vertical position (Figures 3 and 4).

In case of manual rotation, the abutment means preferably also comprise a pair of diagonal blocks fixed to ends of the first C-shaped portion 81. Each diagonal block preferably comprises a flat portion able to abut on the C-shaped support 7 if the parallelogram element 8 is in horizontal position.

The rotation of the parallelogram element 8, without the pneumatic pistons 200, occurs manually using the handle 824 and any further longitudinal handles fixed to the first C-shaped portion 81 which extend in the direction of the parallel tubulars 811.

Otherwise, in the presence of the pneumatic pistons 200, the operator controls the sliding of the rods 202 to rotate the parallelogram element 8 between the vertical and horizontal positions.

Operatively, the operation of removing a wheel from the axle of a motor vehicle raised on a service elevator begins with the gripping device 3 which is moved in space by the operator using the flag support means 2, which are preferably fixed to the column in such a way as to be at a higher height than the vehicle on the service elevator, in order to also move above it.

It should be noted that the flag means 2 can have a single arm 21 and the rod 4 of the pneumatic piston 5 sliding on the single arm 21. The solution with two arms 21, 22 is to be preferred because it facilitates the positioning of the head 6 around the motor vehicle.

Preferably holding the tubulars 71, with the parallelogram element 8 in a vertical position, the operator moves the head 6 near the wheel still fixed to the motor vehicle.

The control means allow the operator to activate the pneumatic piston 5 so as to position the head 6 at the correct height for coupling with the wheel.

The same control means allow the pneumatic pistons 9 to be activated so as to move the gripping rollers 10 away from the gripping roller 11 in order to make the wheel enter the space comprised between the gripping rollers 10, 11.

Once the correct positioning has been achieved, the operator controls the sliding of the parallel tubulars 821 in the parallel tubulars 811, so as to tighten the grip of the wheel between the gripping rollers 10, 11.

Once the bolts securing the wheel to the vehicle axle have been removed, the operator pulls the head 6 towards him/herself, removing the wheel from the vehicle axle.

The flag support means 2 then allow the operator to move the head 6 with the wheel engaged towards an unloading area in which, the parallelogram element 8 is firstly rotated to the horizontal position (using the pneumatic means 200 if provided), then the head 6 is lowered by controlling the pneumatic piston 5 and finally, with the wheel resting on the ground, the pneumatic pistons 9 are controlled by moving the gripping rollers 10 away from the gripping roller 11: the head 6 is decoupled from the wheel and can be removed for a new operation, for example, mounting a wheel, which takes place like the removal operation, but with the reverse procedure.

It should be noted that the gripping rollers 10, 11, as rotatable gripping means, allow the wheel to be rotated about its axis while the wheel is gripped, so as to facilitate centering during mounting.

Advantageously, the equipment 1 according to the present invention allows for example the changing of tires in traditional workshops by moving around the lifted motor vehicle.

Positioning the head 6 and gripping the wheel is simple and risk-free for the operator.

The weight of the gripping device 3 comprising the head 6 and the pneumatic piston 5 is supported by the flag support means 2.

The head 6 is manually moved in space, but the wheel grip and release controls are of pneumatic type.

The C-shaped support 7 and the C-shaped portions 81, 82 are simple to make and can be easily associated with each other.

A simple telescopic movement allows the distance between the gripping rollers 10, 11 to be varied, and an equally simple rotary movement allows the position of the parallelogram element 8 to be modified, from vertical to horizontal and vice versa.

The equipment 1 can be modified according to requirements.

For example, it is possible to provide two gripping rollers associated with the first C-shaped portion 81 and a gripping roller associated with the second C-shaped portion 82.

It is possible that there are more than three gripping rollers in total.

The number and position of the handles may vary.

However, it is essential that there are at least three gripping rollers in total, two on one C-shaped portion 81, 82 and one on the other C-shaped portion 82, 81, and a structure composed of tubulars, in particular a parallelogram element 8 with a variable configuration, both in terms of position and extension of the parallelogram based on the position of the two C-shaped portions 81, 82.

The telescopic movement of the parallel tubulars 821 in the parallel tubulars 811 makes it easy to pick up and release a wheel using a compact structure.

The gripping device 6 is coupled to the flag support means 2 so that it can also be inclined with respect to the vertical so as to make the coupling of the head 6 with the wheel easier.

The gripping device 3 can also rotate about a vertical axis with respect to the flag support means 2, thus ensuring efficient adaptability in narrow spaces.

The support means of the gripping device 3 may not be of the flag type. For example, a support means of the overhead crane type can be provided, wherein horizontal sliding of the gripping device 3 is allowed along a horizontal beam supported by two vertical uprights.

Advantageously, the equipment 1 is made with inexpensive means available on the market, mostly tubular elements with pneumatic means, it adapts to the spaces of any mechanical workshop and allows for example a quick tire change with little effort on the part of the operator who can perform hundreds of tire changes in a day, thus increasing the productivity of the workshop in terms of assistance, especially in the months of April and November when the need for tire changes is greater, from winter tires to summer tires or vice versa.

The tubulars are made of metal material, preferably iron but even aluminum, to make the structure lighter.

The fixing of the head 6 to the cylinder 51 of the pneumatic piston 5 can be indirect, the pneumatic piston 5 determining in any case the change in height of the head 6.

Alternatively, it is possible to provide the rod 4 below the cylinder 51, i.e. the bottom of the rod 4 fixed to the head 6 and the cylinder 51 at the top fixed to the flag support means 2. Anyway, the solution shown in the figures is preferable because it allows greater maneuverability of the gripping device 3 compared to the flag support means 2, and greater stability of the head 6 during the steps of gripping and releasing the wheel.

More generally, therefore, equipment 1 comprises pneumatic means able to vary the height of the head 6, said pneumatic means being capable to take on different shapes but always with at least one pneumatic piston 5 having a rod 4 sliding in a cylinder 51.

## Claims

1. Equipment (1) for mounting and removing a wheel on/from a motor vehicle, and moving the wheel in a mechanical workshop, comprising a gripping device (3) for a wheel and support means (2) of the gripping device (3),
wherein the gripping device (3) comprises pneumatic gripping means (9), a head (6) and pneumatic means (4, 5, 51) able to vary the height of the head (6),
wherein the head (6) comprises a parallelogram element (8) rotatable about a horizontal axis in order to vary its position between a horizontal position and a vertical position,
wherein the parallelogram element (8) is composed of a first C-shaped portion (81) and a second C-shaped portion (82), wherein the first C-shaped portion (81) comprises two parallel tubulars (811) and a connecting tubular (812) able to rigidly connect said two parallel tubulars (811), while the second C-shaped portion (82) comprises two parallel tubulars (821) and a connecting tubular (822) able to rigidly connect said two parallel tubulars (821),
wherein the two parallel tubulars (821) of the second C-shaped portion (82) are able to be telescopically inserted into the two parallel tubulars (811) of the first C-shaped portion (81), two pneumatic pistons (9) controlling the sliding of the second C-shaped portion (82) with respect to the first C-shaped portion (81) thus varying the configuration of the parallelogram element (8) between a wheel gripping position and a wheel releasing position,
wherein on opposite ends of the C-shaped portions (81, 82) of the parallelogram element (8) a total of at least three gripping elements (10, 11) parallel to one other and in combination suitable for gripping a wheel, extend in a direction orthogonal to the tubulars (821, 822, 811, 812), two griping elements (10) from a C-shaped portion (81, 82) and a gripping element (11) from the other C-shaped portion (82, 81),
**characterized in that**
the pneumatic means (4, 5, 51) of the gripping device (3) extend downwards from the support means (2),
the head (6) comprises a C-shaped support (7) to which it is rotatably fixed the parallelogram element (8) which is rotatable about the horizontal axis with respect to the C-shaped support (7),
wherein the first C-shaped portion (81) of the parallelogram element (8) is rotatably fixed to the C-shaped support (7), and
wherein the gripping elements (10, 11) are rollers.

2. Equipment (1) according to claim 1, **characterized in that** the pneumatic pistons (9) comprise cylinders (91) fixed to the parallel tubulars (811) of the first C-shaped portion (81), and rods (92), sliding in the cylinders (91), having one end (921) fixed to projections (823) of the parallel tubulars (821) of the second C-shaped portion (82) so as to move the parallel tubulars (821) of the second C-shaped portion (82) with respect to the parallel tubulars (811) of the first C-shaped portion (81) in the direction of the same tubulars (811, 821).

3. Equipment (1) according to claim 1 or 2, **characterized in that** it comprises pneumatic means able to vary the position of the parallelogram element (8), wherein the pneumatic means comprise a pair of pneumatic pistons (200) which provide a pair of cylinders (201) rotatably fixed to the C-shaped support (7), and respective rods (202) sliding in the cylinders (201) and rotatably fixed to respective parallel tubulars (811) of the first C-shaped portion (81).

4. Equipment (1) according to any one of the preceding claims, **characterized in that** the support means (2) are of the flag type and comprise at least one arm (21) rotatably fixed to means integral with the ground and which extends horizontally, wherein the rotation of the arm (21) with respect to the means integral with the ground takes place about a vertical axis.

5. Equipment (1) according to claim 4, **characterized in that** the flag support means (2) comprise a first arm (21) and a second arm (22) rotatably fixed to the first arm (21) which is rotatably fixed to the means integral to the ground, wherein the arms (21, 22) extend horizontally and the rotations of the second arm (22) with respect to the first arm (21) and of the first arm (21) with respect to the means integral with the ground, take place about a vertical axis.

6. Equipment (1) according to claim 5, **characterized in that** the pneumatic means comprise a rod (4) which is part of a pneumatic piston (5) that extends downwards from a first end (221) of the second arm (22), opposite to a second end (222) rotatably fixed to the first arm (21).

7. Equipment (1) according to any one of the preceding claims, **characterized in that** the parallelogram element (8) comprises abutment means which provide a pair of projections (13) that extend from the connecting tubular (812) of the first C-shaped portion (81) in the opposite direction with respect to the gripping roller (11), wherein the pair of projections (13) is able to abut on the C-shaped support (7) if the parallelogram element (8) is in a vertical position.

8. Equipment (1) according to any one of the preceding claims, **characterized in that** the head (6) comprises handles (71, 824).

9. Equipment (1) according to any one of the preceding claims, **characterized in that** it comprises adjustment means for the position of a gripping roller (11) in a direction orthogonal to the tubulars (811, 812), wherein the regulating means comprise a tubular (111) equipped with through holes, which extends in the direction of the parallel tubulars (811), it is integral with the gripping roller (11) and able to slide in a through hole of the connecting tubular (812), said through hole extending in a projection (813) of the connecting tubular (812), a manually operable pin (112) allowing the position of the gripping roller (11) to be defined with respect to the connecting tubular (812).

## Patentansprüche

1. Gerätschaft (1) zum Montieren und Demontieren eines Rades an/von einem Motorfahrzeug und zum Bewegen des Rades in einer Werkstatt, die eine Greifvorrichtung (3) für ein Rad und eine Trägereinrichtung (2) der Greifvorrichtung (3) aufweist,
wobei die Greifvorrichtung (3) eine pneumatische Greifeinrichtung (9), einen Kopf (6) und eine pneumatische Einrichtung (4, 5, 51) aufweist, die die Höhe des Kopfes (6) variieren kann,
wobei der Kopf (6) ein Parallelogrammelement (8) aufweist, das um eine horizontale Achse drehbar ist, um seine Position zwischen einer horizontalen Position und einer vertikalen Position zu variieren,
wobei das Parallelogrammelement (8) aus einem ersten C-förmigen Teil (81) und einem zweiten C-förmigen Teil (82) besteht, wobei der erste C-förmige Teil (81) zwei parallele rohrförmige Elemente (811) und ein rohrförmiges Verbindungselement (812) aufweist, das die zwei parallelen rohrförmigen Elemente (811) starr verbinden kann, während der zweite C-förmige Teil (82) zwei parallele rohrförmige Elemente (821) und ein rohrförmiges Verbindungselement (822) aufweist, das die zwei parallelen rohrförmigen Elemente (821) starr verbinden kann,
wobei die zwei parallelen rohrförmigen Elemente (821) des zweiten C-förmigen Teils (82) teleskopartig in die zwei parallelen rohrförmigen Elemente (811) des ersten C-förmigen Teils (81) eingeführt werden können, wobei zwei pneumatische Kolben (9) das Gleiten des zweiten C-förmigen Teils (82) relativ zu dem ersten C-förmigen Teil (81) steuern und so die Konfiguration des Parallelogrammelements (8) zwischen einer Radgreifposition und einer Radfreigabeposition variieren,
wobei sich an den gegenüberliegenden Enden der C-förmigen Teile (81, 82) des Parallelogrammelements (8) insgesamt mindestens drei zueinander parallele Greifelemente (10, 11), die in Kombination zum Greifen eines Rades geeignet sind, in einer Richtung rechtwinklig zu den rohrförmigen Elementen (821, 822, 811, 812) erstrecken; zwei Greifelemente (10) von einem C-förmigen Teil (81, 82) und ein Greifelement (11) von dem anderen C-förmigen Teil (82, 81),
**dadurch gekennzeichnet, dass**
sich die pneumatische Einrichtung (4, 5, 51) der Greifvorrichtung (3) von der Trägereinrichtung (2) aus nach unten erstreckt,
der Kopf (6) einen C-förmigen Träger (7) aufweist, an dem das Parallelogrammelement (8) drehbar befestigt ist, welches um die horizontale Achse in Bezug auf den C-förmigen Träger (7) drehbar ist,
wobei der erste C-förmige Teil (81) des Parallelogrammelements (8) drehbar an dem C-förmigen Träger (7) befestigt ist, und
wobei die Greifelemente (10, 11) Rollen sind.

2. Gerätschaft (1) nach Anspruch 1, **dadurch gekennzeichnet, dass** die pneumatischen Kolben (9) Zylinder (91), die an den parallelen rohrförmigen Elementen (811) des ersten C-förmigen Teils (81) befestigt sind, und Stangen (92) aufweisen, die in den Zylindern (91) gleiten und deren eines Ende (921) an Vorsprüngen (823) der parallelen rohrförmigen Elemente (821) des zweiten C-förmigen Teils (82) befestigt sind, um die parallelen rohrförmigen Elemente (821) des zweiten C-förmigen Teils (82) relativ zu den parallelen rohrförmigen Elementen (811) des ersten C-förmigen Teils (81) in Richtung dieser rohrförmigen Elemente (811, 821) zu bewegen.

3. Gerätschaft (1) nach Anspruch 1 oder 2, **dadurch gekennzeichnet, dass** sie eine pneumatische Einrichtung aufweist, die die Position des Parallelogrammelements (8) variieren kann, wobei die pneumatische Einrichtung ein Paar pneumatischer Kolben (200) aufweist, die ein Paar Zylinder (201) bereitstellen, die drehbar an dem C-förmigen Träger (7) befestigt sind, und jeweilige Stangen (202), die in den Zylindern (201) gleiten und drehbar an jeweiligen parallelen rohrförmigen Elementen (811) des ersten C-förmigen Teils (81) befestigt sind.

4. Gerätschaft (1) nach einem der vorhergehenden Ansprüche, **dadurch gekennzeichnet, dass** die Trägereinrichtung (2) in Fahnentypform ausgebildet ist und mindestens einen Arm (21) aufweist, der drehbar an einer mit dem Boden verbundenen Einrichtung befestigt ist und sich horizontal erstreckt, wobei die Drehung des Arms (21) gegenüber der mit dem Boden verbundenen Einrichtung um eine vertikale Achse erfolgt.

5. Gerätschaft (1) nach Anspruch 4, **dadurch gekennzeichnet, dass** die Trägereinrichtung (2) in Fahnentypform einen ersten Arm (21) und einen zweiten Arm (22) aufweist, der drehbar an dem ersten Arm (21) befestigt ist, der drehbar an der integral mit dem Boden verbundenen Einrichtung befestigt ist, wobei sich die Arme (21, 22) horizontal erstrecken und die Drehungen des zweiten Arms (22) relativ zu dem ersten Arm (21) und des ersten Arms (21) relativ zu der integral mit dem Boden verbundenen Einrichtung um eine vertikale Achse erfolgen.

6. Gerätschaft (1) nach Anspruch 5, **dadurch gekennzeichnet, dass** die pneumatische Einrichtung eine Stange (4) aufweist, die Teil eines pneumatischen Kolbens (5) ist, der sich von einem ersten Ende (221) des zweiten Arms (22) nach unten erstreckt, gegenüber einem zweiten Ende (222), das drehbar an dem ersten Arm (21) befestigt ist.

7. Gerätschaft (1) nach einem der vorhergehenden Ansprüche, **dadurch gekennzeichnet, dass** das Parallelogrammelement (8) eine Anlageeinrichtung aufweist, die ein Paar Vorsprünge (13) bereitstellt, die sich von dem rohrförmigen Verbindungselement (812) des ersten C-förmigen Teils (81) in entgegengesetzter Richtung zu der Greifrolle (11) erstrecken, wobei das Paar von Vorsprüngen (13) an dem C-förmigen Träger (7) anliegen kann, wenn sich das Parallelogrammelement (8) in einer vertikalen Position befindet.

8. Gerätschaft (1) nach einem der vorhergehenden Ansprüche, **dadurch gekennzeichnet, dass** der Kopf (6) Griffe (71, 824) aufweist.

9. Gerätschaft (1) nach einem der vorhergehenden Ansprüche, **dadurch gekennzeichnet, dass** sie eine Anpasseinrichtung für die Position einer Greifrolle (11) in einer zu den rohrförmigen Elementen (811, 812) rechtwinkligen Richtung aufweist, wobei die Regulierungseinrichtung ein mit Durchgangslöchern versehenes rohrförmiges Element (111) aufweist, das sich in Richtung der parallelen rohrförmigen Elemente (811) erstreckt, integral mit der Greifrolle (11) gebildet ist und in einem Durchgangsloch des rohrförmigen Verbindungselements (812) gleiten kann, wobei sich das Durchgangsloch in einem Vorsprung (813) des rohrförmigen Verbindungselements (812) erstreckt, wobei ein manuell betätigbarer Stift (112) es ermöglicht, die Position der Greifrolle (11) in Bezug auf das rohrförmige Verbindungselement (812) zu definieren.

## Revendications

1. Équipement (1) destiné au montage et au démontage d'une roue sur/d'un véhicule automobile, et au déplacement de la roue dans un atelier mécanique, comprenant un dispositif de préhension (3) pour une roue et des moyens de support (2) du dispositif de préhension (3),
dans lequel le dispositif de préhension (3) comprend des moyens de préhension pneumatiques (9), une tête (6) et des moyens pneumatiques (4, 5, 51) aptes à faire varier la hauteur de la tête (6),
dans lequel la tête (6) comprend un élément en parallélogramme (8) pouvant tourner autour d'un axe horizontal afin de faire varier sa position entre une position horizontale et une position verticale,
dans lequel l'élément en parallélogramme (8) est composé d'une première partie en forme de C (81) et d'une deuxième partie en forme de C (82), dans lequel la première partie en forme de C (81) comprend deux tubes parallèles (811) et un tube de liaison (812) apte à relier rigidement lesdits deux tubes parallèles (811), tandis que la deuxième partie en forme de C (82) comprend deux tubes parallèles (821) et un tube de liaison (822) apte à relier rigidement lesdits deux tubes parallèles (821),
dans lequel les deux tubes parallèles (821) de la deuxième partie en forme de C (82) peuvent être insérés télescopiquement dans les deux tubes parallèles (811) de la première partie en forme de C (81), deux pistons pneumatiques (9) commandant le glissement de la deuxième partie en forme de C (82) par rapport à la première partie en forme de C (81), faisant ainsi varier la configuration de l'élément en parallélogramme (8) entre une position de préhension de la roue et une position de libération de la roue,
dans lequel, sur les extrémités opposées des parties en forme de C (81, 82) de l'élément en parallélogramme (8), au moins trois éléments de préhension (10, 11) au total, parallèles les uns aux autres et en combinaison adaptée pour la préhension d'une roue, s'étendent dans une direction orthogonale aux tubes (821, 822, 811, 812), deux éléments de préhension (10) provenant d'une partie en forme de C (81, 82) et un élément de préhension (11) provenant de l'autre partie en forme de C (82, 81),
**caractérisé en ce que**
les moyens pneumatiques (4, 5, 51) du dispositif de préhension (3) s'étendent vers le bas à partir des moyens de support (2),
la tête (6) comprend un support en forme de C (7) auquel est fixé de manière rotative l'élément en parallélogramme (8) qui peut tourner autour de l'axe horizontal par rapport au support en forme de C (7),
dans lequel la première partie en forme de C (81) de l'élément en parallélogramme (8) est fixée de manière rotative au support en forme de C (7), et
dans lequel les éléments de préhension (10, 11) sont des rouleaux.

2. Équipement (1) selon la revendication 1, **caractérisé en ce que** les pistons pneumatiques (9) comprennent des cylindres (91) fixés aux tubes parallèles (811) de la première partie en forme de C (81), et des tiges (92), glissant dans les cylindres (91), ayant une extrémité (921) fixée aux saillies (823) des tubes parallèles (821) de la deuxième partie en forme de C (82) de manière à déplacer les tubes parallèles (821) de la deuxième partie en forme de C (82) par rapport aux tubes parallèles (811) de la première partie en forme de C (81) dans la direction des mêmes tubes (811, 821).

3. Équipement (1) selon la revendication 1 ou 2, **caractérisé en ce qu'** il comprend des moyens pneumatiques aptes à faire varier la position de l'élément en parallélogramme (8), dans lequel les moyens pneumatiques comprennent une paire de pistons pneumatiques (200) qui fournissent une paire de cylindres (201) fixés de manière rotative au support en forme de C (7), et des tiges (202) respectives glissant dans les cylindres (201) et fixées de manière rotative à des tubes parallèles (811) respectifs de la première partie en forme de C (81).

4. Équipement (1) selon l'une quelconque des revendications précédentes, **caractérisé en ce que** les moyens de support (2) sont du type drapeau et comprennent au moins un bras (21) fixé de manière rotative à des moyens solidaires du sol et qui s'étend horizontalement, dans lequel la rotation du bras (21) par rapport aux moyens solidaires du sol, s'effectue autour d'un axe vertical.

5. Équipement (1) selon la revendication 4, **caractérisé en ce que** les moyens de support de drapeau (2) comprennent un premier bras (21) et un deuxième bras (22) fixé de manière rotative au premier bras (21) qui est fixé de manière rotative aux moyens solidaires du sol, dans lequel les bras (21, 22) s'étendent horizontalement et les rotations du deuxième bras (22) par rapport au premier bras (21) et du premier bras (21) par rapport aux moyens solidaires du sol, s'effectuent autour d'un axe vertical.

6. Équipement (1) selon la revendication 5, **caractérisé en ce que** les moyens pneumatiques comprennent une tige (4) qui fait partie d'un piston pneumatique (5) qui s'étend vers le bas à partir d'une première extrémité (221) du deuxième bras (22), opposée à une deuxième extrémité (222) fixée de manière rotative au premier bras (21).

7. Équipement (1) selon l'une quelconque des revendications précédentes, **caractérisé en ce que** l'élément en parallélogramme (8) comprend des moyens de butée qui fournissent une paire de saillies (13) s'étendant à partir du tube de liaison (812) de la première partie en forme de C (81) dans la direction opposée par rapport au rouleau de préhension (11), dans lequel la paire de saillies (13) est apte à venir en butée contre le support en forme de C (7) si l'élément en parallélogramme (8) est dans une position verticale.

8. Équipement (1) selon l'une quelconque des revendications précédentes, **caractérisé en ce que** la tête (6) comprend des poignées (71, 824).

9. Équipement (1) selon l'une quelconque des revendications précédentes, **caractérisé en ce qu'** il comprend des moyens de réglage de la position d'un rouleau de préhension (11) dans une direction orthogonale aux tubes (811, 812), dans lequel les moyens de réglage comprennent un tube (111) muni de trous traversants, qui s'étend en direction des tubes parallèles (811), il est solidaire du rouleau de préhension (11) et apte à glisser dans un trou traversant du tube de liaison (812), ledit trou traversant s'étendant dans une saillie (813) du tube de liaison (812), une goupille (112) actionnable manuellement permettant de définir la position du rouleau de préhension (11) par rapport au tube de liaison (812).
